# EUROPÄISCHE PATENTSCHRIFT

(11) **EP 1 004 795 B1**
(45) Veröffentlichungstag und Bekanntmachung des Hinweises auf die Patenterteilung: **02.05.2002**
(21) Anmeldenummer: 98122496.7
(22) Anmeldetag: 27.11.1998
(51) Int. Cl.: F16H 3/091

(54) **Wechselgetriebe mit einer Vorgelegewelle, insbesondere für Kraftfahrzeuge**
Change speed transmission with one countershaft, particularly for automotive vehicles.
Boîte de vitesses avec un arbre intermédiaire, notamment pour véhicules automobiles

(43) Veröffentlichungstag der Anmeldung: 31.05.2000
(73) Patentinhaber: Ford Global Technologies, Inc., A subsidiary of Ford Motor Company, Dearborn, Michigan 48126 (US)
(72) Erfinder: Eggert, Ulrich, 41751 Viersen (DE); Dahl, Peter, 51515 Kuerten (DE); Nett, Hans Peter, 53518 Adenau (DE); Hegerath, Andreas, 50126 Bergheim (DE)
(74) Vertreter: Drömer, Hans-Carsten, Dipl.-Ing.

(56) Entgegenhaltungen:
- DE-A- 3 812 327
- DE-A- 3 932 968
- DE-A- 4 122 628
- DE-B- 1 249 708
- DE-C- 19 614 930
- GB-A- 2 175 361

## Beschreibung

Die Erfindung bezieht sich auf ein Wechselgetriebe mit einer Vorgelegewelle, insbesondere für Kraftfahrzeuge der im Oberbegriff der Patentansprüche 1 bzw. 2 erläuterten Art.

Aus der DE 38 12 327 C2 ist ein gattungsgemäßes Wechselgetriebe entsprechend dem Oberbegriff des Patentanspruchs 2 bekannt, das eine Getriebebauweise mit einer sogenannten antriebsseitigen Getriebekonstante darstellt, wobei hier bereits durch die Anordnung von einer Doppel-Reibscheibenkupplung zwei Eingangs-Getriebekonstante zur Verfügung stehen.

Aus der DE 196 14 930 A1 ist ein gattungsgemäßes Wechselgetriebe entsprechend dem Oberbegriff des Patentanspruchs 1 bekannt, das eine Getriebebauweise mit einer sogenannten abtriebsseitigen Getriebekonstanten darstellt. Abgesehen von den sogenannten direkten Gängen wird die Übersetzung eines jeden einem bestimmten Gang zugeordneten Zahnradpaares durch die sogenannte Getriebekonstante beeinflußt.

Die Aufgabe der Erfindung ist es, ein Wechselgetriebe mit einer Vorgelegewelle, insbesondere für Kraftfahrzeuge zu schaffen, bei dem die beiden oben erwähnten Getriebebauweisen in Kombination angewendet werden, wodurch die damit verbundenen Vorteile in unterschiedlicher Weise für die verschiedenen Gänge ausgeschöpft werden können, wobei die Getriebeauslegungen hierbei so aufzubauen sind, daß die verwendeten Zahnradpaare im wesentlichen identisch sind, d.h., mit den einmal in der Fertigung hergestellten Zahnradbauteilen soll selektiv ein rein manuell schaltbares 6-Gang-Getriebe oder aber ein halbautomatisch oder automatisch schaltbares, zugkraftunterbrechungsfrei schaltbares Automatikgetriebe bereitgestellt werden.

Gemäß der Erfindung wird diese Aufgabe gelöst, indem bei einem Wechselgetriebe mit einer Vorgelegewelle, insbesondere für Kraftfahrzeuge, der im jeweiligen Oberbegriff der Patentansprüche 1 oder 2 erläuterten Art die im jeweiligen Kennzeichen der Patentansprüche 1 oder 2 aufgezeigten Merkmale angewendet werden.

Dadurch, daß für die hoch untersetzten, niedrigen Gänge, wie den 1. Gang, den 2. Gang, den 3. Gang und den Rückwärtsgang, eine abtriebsseitige Getriebekonstante zum Einsatz kommt, kann die Drehmomentbelastung dieser Zahnradpaare und Synchronkupplungen geringer gehalten werden, während bei den höheren, weniger untersetzten Gängen, dem 5. und dem 6. Gang, auf die mit Einbeziehung der abtriebsseitigen Getriebekonstante verzichtet wird.

Bei der Ausführungsform eines erfindungsgemäßen Wechselgetriebes mit Vorgelegewelle für ein zugkraftunterbrechungsfrei schaltbares, halbautomatisches oder automatisches Wechselgetriebe werden ähnliche Vorteile in einer multiplizierten Anordnung der Zahnradpaare erzielt.

Die Erfindung wird anhand zweier in den Zeichnungen gezeigten Ausführungsbeispiele näher erläutert. Es zeigt:
- Fig. 1: ein Getriebeschaubild eines Wechselgetriebes gemäß der Erfindung in einer Ausführung als handschaltbares 6-Gang-Getriebe;
- Fig. 2: den Drehmomentfluß in den verschiedenen Gängen des Wechselgetriebes, nach Fig. 1;
- Fig. 3: eine Ausführungsform eines erfindungsgemäßen Wechselgetriebes als ein mit einer Doppel-Reibscheibenkupplung versehenes zum halb- oder vollautomatischen Schalten vorgesehenes 6-Gang-Getriebe und
- Fig. 4: den Drehmomentfluß in den verschiedenen Gangstufen des Wechselgetriebes, nach Fig. 3.

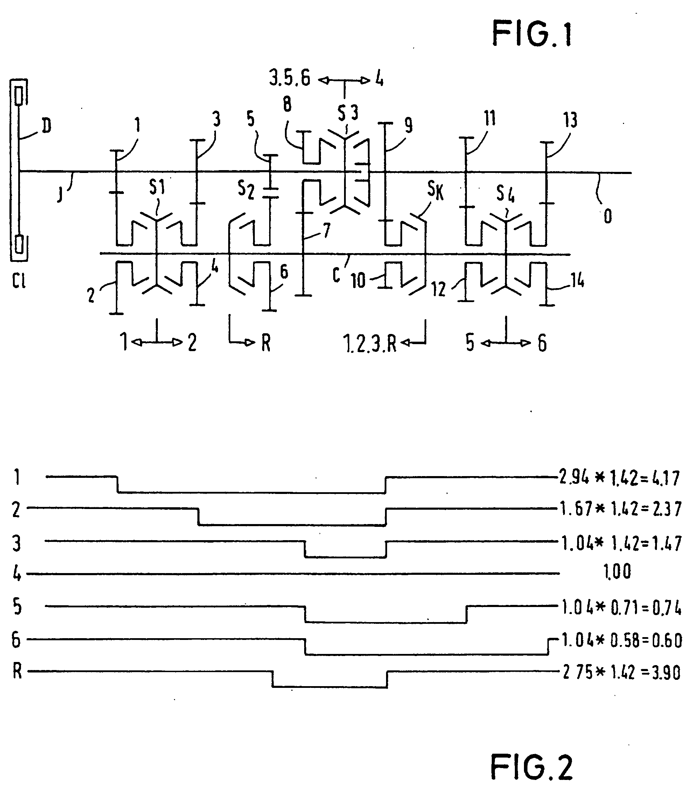

In Fig. 1 ist eine Reibscheibenkupplung mit CL bezeichnet und deren Reibscheibe D ist unmittelbar drehfest mit einer Eingangswelle I verbunden. Parallel zur Eingangswelle I ist eine Vorgelegewelle C angeordnet und koaxial zur Eingangswelle I erstreckt sich eine Ausgangswelle O aus dem Getriebegehäuse (nicht gezeigt).

Zahnradpaare, bestehend jeweils aus einem festen Zahnrad und einem losen Zahnrad, sind auf der Eingangswelle I, der Vorgelegewelle C und der Ausgangswelle O angeordnet und die jeweiligen Losräder sind über entsprechende Synchronisierkupplungen mit ihren jeweiligen Wellen selektiv verbindbar.

Auf der Eingangswelle I und der Vorgelegewelle C ist ein Zahnradpaar 1/2 für den 1. Gang, ein Zahnradpaar 3/4 für den 2. Gang mit einer dazwischenliegenden Doppel-Synchronkupplung S1 angeordnet. Weiterhin ist ein Zahnradpaar 5/6 mit einem·nicht gezeigten Rückwärtsgang-Umkehrrad und einer einfachen Synchronkupplung S2 für einen Rückwärtsgang angeordnet. Weiterhin ist ein Zahnradpaar 7/8 für den 3. Gang auf der Eingangswelle I bzw. der Vorgelegewelle C angeordnet und kann über die eine Seite einer doppelten Synchronkupplung S3 eingerückt werden.

Über die andere Seite der Doppel-Synchronkupplung S3 kann die Eingangswelle I unmittelbar mit der Ausgangswelle O treibend verbunden werden, wodurch ein direkter 4. Gang geschaltet wird.

Auf der Ausgangswelle O bzw. der Vorgelegewelle C ist ein Zahnradpaar 9/10, das die Getriebekonstante bildet, über eine einfache Synchronkupplung SK einrückbar. Weiterhin sind auf der Ausgangswelle O und der Vorgelegewelle C Zahnradpaare 11/12 für einen 5. Gang und 13/14 für einen 6. Gang mit einer zwischen ihnen angeordneten Doppel-Synchronkupplung S4 angeordnet.

Der Drehmomentfluß in den einzelnen Gängen ist der unmittelbar unterhalb der Fig. 1 angeordneten Fig. 2 zu entnehmen, an der ebenso die erzielte Übersetzung aufgezeigt sind.

Es ist dem Fachmann durch einen Blick ersichtlich, daß für die hoch untersetzten, niedrigen Gänge, des 1., 2. und 3. sowie des Rückwärtsganges die Vorteile einer abtriebsseitigen Getriebekonstanten ausgenützt werden, die darin liegen, daß die entsprechenden Zahnradpaare und deren Synchronisierkupplungen geringer belastet werden, da ein Teil der erforderlichen hohen Untersetzung durch die abtriebsseitige Getriebekonstante beigetragen wird.

Bei dem erläuterten erfindungsgemäßen Wechselgetriebe muß allerdings in Kauf genommen werden, daß bei einem Bereichswechsel zwischen den niedrigen Gängen und den höheren Gängen die entsprechende Einfach-Synchronkupplung SK für die Getriebekonstante geschaltet werden muß.

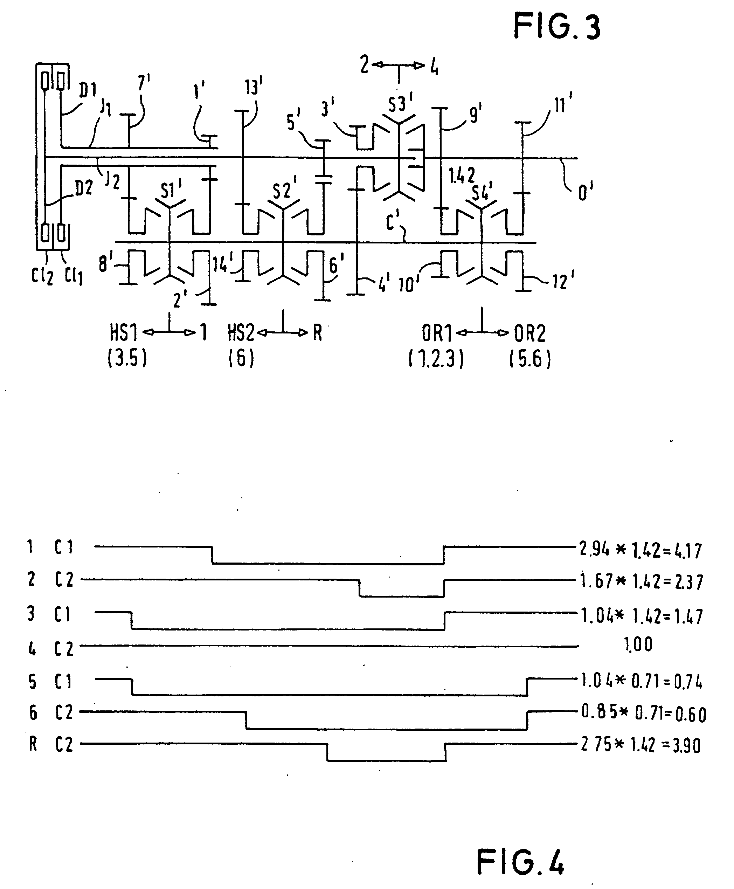

In Fig. 3 ist eine weitere Ausführungsform eines erfindungsgemäßen Wechselgetriebes gezeigt.

Das Wechselgetriebe weist in dieser Ausführungsform eine Doppel-Reibscheibenkupplung mit Kupplungseinheiten CL1 und CL2 auf, deren entsprechende Kupplungscheiben D1 und D2 mit einer Eingangshohlwelle I1 und einer Eingangszentralwelle I2 treibend verbunden sind.

Die entsprechenden Zahnradpaare aus einem Festrad und einem Losrad sind wieder mit den gleichen, nur mit einem Strich-Index versehenen Bezugszeichen wie in Fig. 1 bezeichnet.

Ein Zahnradpaar 1'/2' ist einerseits auf der Eingangswelle I1 und andererseits auf der Vorgelegewelle C' angeordnet.

Ein Zahnradpaar 7'/8', das eine Teilübersetzung für den 3. und 5. Gang bereitstellt, ist einerseits auf der Eingangswelle I1 und andererseits auf der Vorgelegewelle C' angeordnet. Eine entsprechende Doppel-Synchronkupplung S1' ist zum Schalten dieser beiden Zahnradpaare auf der Vorgelegewelle C' angeordnet.

Auf der Eingangswelle 12 und der Vorgelegewelle C' sind weitere Zahnradpaare angeordnet, ein Zahnradpaar 3'/4' für einen 2. Gang, ein Zahnradpaar 5'/6' mit einem nicht gezeigten Rückwärtsgangumkehrrad für einen Rückwärtsgang und ein Zahnradpaar 13'/14' für einen 6. Gang. Eine entsprechende Doppel-Synchronkupplung S2' ist auf der Vorgelegewelle C' zum Schalten des Rückwärtsganges und des 6. Ganges angeordnet. Auf der Eingangswelle 12 ist eine Doppel-Synchronkupplung S3' angeordnet, mit der der 2. Gang bzw. der direkte 4. Gang geschaltet werden kann.

Auf der Ausgangswelle O' bzw. der Vorgelegewelle C' sind weitere Zahnradpaare 9'/10' und 10'/12' angeordnet, wobei das Zahnradpaar 9'/10' die abtriebsseitig angeordnete Getriebekonstante darstellt. Das Zahnradpaar 10'/12' stellt eine Teilübersetzung für den 5. und 6. Gang zur Verfügung.

Zwischen den beiden Zahnradpaaren 9'/10' und 11'/12' ist eine Doppel-Synchronkupplung S4' zum Schalten der unterschiedlichen Gänge angeordnet.

Wie sich aus einer genaueren Betrachtung der Fig. 3 ergibt, stellt das auf der Eingangswelle I1 angeordnete Zahnradpaar 7'/8' eine antriebsseitige Getriebekonstante HS1 dar, die eine Teilübersetzung für den 3. und 5. Gang zur Verfügung stellt. Das auf der Eingangswelle I2 angeordnete Zahnradpaar 13'/14' stellt hierbei eine zweite antriebsseitige Getriebekonstante HS2 dar, die eine Teilübersetzung für den 6. Gang bereitstellt. Die auf der Ausgangswelle O' bzw. der Vorgelegewelle C' angeordneten Zahnradpaare 9'/10' und 11'/12' stellen praktisch zwei selektiv wählbare abtriebsseitige Getriebekonstante 0R1 und 0R2 dar, die wahlweise in Zusammenhang mit den entsprechenden Zahnradpaaren einmal zum Bereitstellen der Gesamtübersetzung für den 1., 2. und 3. Gang und das andere Mal zur Bereitstellung der Gesamtübersetzung für den 5. und 6. Gang herangezogen werden.

Der entsprechende Drehmomentfluß in den einzelnen Gangstufen ist in der genau unterhalb der Fig. 3 angeordneten Fig. 4 ersichtlich.

Wie schon im Zusammenhang mit den Figuren 1 und 2 erläutert, ist in den höher untersetzten niedrigen Gängen 1, 2, und 3 und den Rückwärtsgang jeweils zwei Zahnradpaare in Eingriff, der 4. Gang ist als direkter Gang ohne Zahnradeingriff ausgelegt und in den ins schnelle übersetzten höhere Gänge 5 und 6 sind wieder jeweils zwei Zahnradpaare im Eingriff, um die gewünschte Gesamtübersetzung zur Verfügung zu stellen.

## Patentansprüche

1. Wechselgetriebe für Kraftfahrzeuge
- mit einer Eingangswelle (I),
- einer Vorgelegewelle (C) und
- einer koaxial zur Eingangswelle angeordneten Ausgangswelle (O)
- und einer Vielzahl von aus je einem Fest- und einem Losrad gebildeten Zahnradpaaren, die auf den drei Getriebewellen angeordnet sind,
- wobei die Losräder über jeweils benachbart angeordnete Synchronkupplungen (S1, S2, S3, SK, S4) selektiv mit den jeweiligen Getriebewellen treibend verbindbar sind
- und wobei in einigen Gangstufen zwei Zahnradpaare gleichzeitig in drehmomentübertragendem Eingriff stehen,
- wobei die Zahnradpaare (1/2; 3/4; 7/8) für den ersten, zweiten und dritten Gang über eine auf der Vorgelegewelle (C) angeordnete Synchronkupplung (SK) und über eine abtriebsseitige angeordnete Getriebekonstante (9/10) auf die Ausgangswelle (8) wirken, **dadurch gekennzeichnet, daß**
- das Zahnradpaar (5/6) für den Rückwärtsgang ebenfalls über die auf der Vorgelegewelle (C) angeordnete Synchronkupplung (SK) und über die Getriebekonstante (9/10) auf die Ausgangswelle (8) wirkt, und
- die verbleibenden Zahnradpaare (I1/I2 und 13/14) für die höheren, weniger untersetzten Gänge über die verbleibende Synchronkupplung (S4) selektiv mit der Ausgangswelle (O) verbindbar sind.

2. Wechselgetriebe für Kraftfahrzeuge mit
- zwei konzentrischen Eingangswellen (11 und 12),
- einer Vorgelegewelle (C') und
- einer koaxial zu den Eingangswellen angeordneten Ausgangswelle (O') und
- einer Vielzahl von aus je einem Fest- und einem Losrad gebildeten Zahnradpaaren, die auf den vier Getriebewellen angeordnet sind,
- wobei die Losräder über jeweils benachbart angeordnete Synchronkupplungen selektiv mit der jeweiligen Getriebewelle treibend verbindbar sind,
- wobei die beiden Eingangswellen (I1 und I2) über zwei selektiv schaltbare Zahnradpaare (7'/8' und 13'/14') Drehmoment über zwei unterschiedliche antriebsseitige Getriebekonstanten (HS1 bzw. HS2) auf die Vorgelegewelle (C') übertragen, und
- wobei in allen Gängen mit Ausnahme des Direktganges jeweils zwei Zahnradpaare die gewünschte Endübersetzung bereitstellen, **dadurch gekennzeichnet, daß**
- zwei Zahnradpaare (9'/10' und 11'/12') zwischen der Vorgelegewelle (C') und der Ausgangswelle (O') zwei abtriebsseitige Getriebekonstanten (OR1 und OR2) bilden,
- und jeder Eingangswelle zwei selektiv schaltbare Zahnradpaare zugeordnet sind.

## Claims

1. Change-speed gearbox for motor vehicles
- with an input shaft (I),
- a layshaft (C) and
- an output shaft (O) coaxial with the input shaft
- and a multiplicity of gearwheel pairs, which are each formed by a fixed wheel and a loose wheel and are arranged on the three gearbox shafts,
- it being possible for the loose wheels to be connected selectively for purposes of driving to the respective gearbox shafts by means of respective adjacently arranged synchronizing clutches (S1, S2, S3, SK, S4)
- and two gearwheel pairs being simultaneously in torque-transmitting engagement in some gear stages,
- the gearwheel pairs (1/2; 3/4; 7/8) for first, second and third gear acting on the output shaft (8) via a synchronizing clutch (SK) arranged on the layshaft (C) and via a gearbox constant (9/10) arranged on the output side, **characterized in that**
- the gearwheel pair (5/6) for reverse gear likewise acts on the output shaft (8) via the synchronizing clutch (SK) arranged on the layshaft (C) and via the gearbox constant (9/10), and
- it is possible for the remaining gearwheel pairs (11/12 and 13/14) for the higher gears with a smaller reduction to be connected selectively to the output shaft (O) by means of the remaining synchronizing clutch (S4).

2. Change-speed gearbox for motor vehicles with
- two concentric input shafts (I1 and I2),
- a layshaft (C') and
- an output shaft (O') arranged coaxially with the input shafts, and
- a multiplicity of gearwheel pairs, which are each formed by a fixed wheel and a loose wheel and are arranged on the four gearbox shafts,
- it being possible for the loose wheels to be connected selectively for purposes of driving to the respective gearbox shaft by means of respective adjacently arranged synchronizing clutches,
- the two input shafts (I1 and I2) transmitting torque to the layshaft (C') via two selectable gearwheel pairs (7'/8' and 13'/14') via two different input-side gearbox constants (HS1 and HS2 respectively), and
- two gearwheel pairs in each case providing the desired final transmission ratio in all gears with the exception of the direct gear, **characterized in that**
- two gearwheel pairs (9'/10' and 11'/12') between the layshaft (C') and the output shaft (O') form two output-side gearbox constants (OR1 and OR2),
- and each input shaft is assigned two selectable gearwheel pairs.

## Revendications

1. Boîte de vitesses pour véhicules automobiles, avec
- un arbre d'entrée (I)
- un arbre intermédiaire (C) et
- un arbre de sortie (O) disposé coaxialement à l'arbre d'entrée,
- et une pluralité de couples de roues dentées formés chaque fois d'une roue fixe et d'une roue folle, qui sont disposés sur les trois arbres de la boîte de vitesses,
- dans laquelle les roues folles peuvent être couplées avec entraînement de manière sélective avec les arbres respectifs de la boîte de vitesses par des accouplements synchrones (S1, S2, S3, SK, S4) respectivement voisins, et
- dans laquelle deux couples de roues dentées se trouvent, dans quelques rapports de vitesses, simultanément en prise de transmission de couple moteur,
- dans laquelle les couples de roues dentées (1/2; 3/4; 7/8) pour la première, la deuxième et la troisième vitesse agissent sur l'arbre de sortie (O) par un accouplement synchrone (SK) disposé sur l'arbre intermédiaire (C) et par un rapport constant (9/10) disposé du côté de la sortie, **caractérisée en ce que**
- le couple de roues dentées (5/6) pour la marche arrière agit également sur l'arbre de sortie (O) par l'accouplement synchrone (SK) disposé sur l'arbre intermédiaire (C) et par le rapport constant (9/10), et
- les couples de roues dentées restants (11/12 et 13/14) peuvent être couplés de manière sélective à l'arbre de sortie (O) par l'accouplement synchrone restant (S4), pour les vitesses plus élevées, moins démultipliées.

2. Boîte de vitesses pour véhicules automobiles, avec
- deux arbres d'entrée concentriques (I1 et I2),
- un arbre intermédiaire (C') et
- un arbre de sortie (O') disposé coaxialement aux arbres d'entrée et
- une pluralité de couples de roues dentées formés chaque fois d'une roue fixe et d'une roue folle, qui sont disposés sur les quatre arbres de la boîte de vitesses,
- dans laquelle les roues folles peuvent être couplées avec entraînement de manière sélective avec l'arbre respectif de la boîte de vitesses par des accouplements synchrones respectivement voisins,
- dans laquelle les deux arbres d'entrée (I1 et I2) transmettent par deux couples de roues dentées (7'/8' et 13'/14') un couple moteur à l'arbre intermédiaire (C') par deux rapports constants (HS1 respectivement HS2) différents situés du côté de l'entraînement, et
- dans laquelle, pour toutes les vitesses à l'exception de la prise directe, chaque fois deux couples de roues dentées fournissent la démultiplication finale désirée, **caractérisée en ce que**
- deux paires de roues dentées (9'/10' et 11'/12') forment deux rapports constants (OR1 et OR2), situés du côté de la sortie, entre l'arbre intermédiaire (C') et l'arbre de sortie (O'), et
- à chaque arbre d'entrée sont associés deux couples de roues dentées pouvant être engagés de manière sélective.
